# EUROPÄISCHE PATENTSCHRIFT

(11) **EP 3 087 035 B1**
(45) Veröffentlichungstag und Bekanntmachung des Hinweises auf die Patenterteilung: **15.11.2017**
(21) Anmeldenummer: 14820748.3
(22) Anmeldetag: 15.12.2014
(51) Int. Cl.: C02F 1/76, C02F 1/50, C02F 103/28, C02F 1/66, C02F 3/30, C02F 5/02

(54) **VERFAHREN ZUR BIOZIDEN BEHANDLUNG VON INDUSTRIELLEN WASSERKREISLÄUFEN**
METHOD FOR THE BIOCIDAL TREATMENT OF INDUSTRIAL WATER CIRCUITS
PROCÉDÉ DE TRAITEMENT BIOCIDE DES CIRCUITS D'EAU INDUSTRIELS

(30) Priorität: 23.12.2013 DE 102013021893
(43) Veröffentlichungstag der Anmeldung: 02.11.2016
(73) Patentinhaber: Kurita Water Industries Ltd., Nakano-ku, Tokyo 164-0001 (JP)
(72) Erfinder: IMHOF, Joachim, 67065 Ludwigsghafen (DE); DITTMANN, Peter, 68723 Oftersheim (DE); RALF, Frank, 58710 Menden (DE)
(74) Vertreter: Zellentin & Partner mbB Patentanwälte
(86) Internationale Anmeldenummer: PCT/EP2014/003356
(87) Internationale Veröffentlichungsnummer: WO 2015/096892

(56) Entgegenhaltungen:
- EP-A1- 0 517 102
- JP-A- H06 142 661
- DATABASE WPI Week 201368 Thomson Scientific, London, GB; AN 2013-Q06403 XP002736805, -& WO 2013/145440 A1 (KURITA WATER IND LTD) 3. Oktober 2013 (2013-10-03)

## Beschreibung

Die vorliegende Erfindung betrifft ein Verfahren zur Behandlung von industriellen Wasserkreisläufen in der Papierproduktion, insbesondere zur Reduktion der Calcium-Belastung und des chemischen Sauerstoffbedarfs (CSB) in diesen industriellen Wasserkreisläufen, wobei einem Wasserkreislauf, der ein Halogenamin als oxidativ wirkendes Biozid oder Biozidsystem enthält, ein Alkalichlorit zugefügt wird, und ein Mittel zur Behandlung von industriellen Wasserkreisläufen, umfassend ein oxidativ wirkendes Biozid oder Biozidsystem und ein Alkalichlorit, sowie die Verwendung von Alkalichlorit als Zusatz zur Behandlung industrieller Abwassersysteme, die ein oxidativ wirkendes Biozid oder Biozidsystem enthalten.

In vielen Industriezweigen spielt Wasser eine große Rolle. Einerseits Wasser in geschlossenen Kreisläufen, z.B. zur Kühlung oder Heizung, andererseits als Komponente z. B. bei der Materialbearbeitung.

Beispielsweise werden für das Altpapierrecycling große Mengen an Kreislaufwasser, Filtrate (kein Frischwasser) benötigt. Das gesammelte Altpapier wird z.B. zerkleinert und im sog. Deinking-Verfahren von färbenden Bestandteilen, wie Druckerfarbe, gereinigt. Danach wird das Faser-Wassergemisch auf Siebmaschinen zu neuen Papierbahnen entwässert. Sowohl unter Kosten- als auch unter Umweltgesichtspunkten ist es wünschenswert, das benötigte Wasser größtenteils wiederzuverwenden. Dabei muss jedoch sichergestellt werden, dass die Wasserqualität stets ausreicht.

Die in der Praxis übliche Einengung der Wasserkreisläufe, Reduktion von Frischwassereinsatz, führt zu einer deutlichen Erhöhung des chemischen Sauerstoffbedarfs, d.h. zu einer CSB Belastung im gesamten System.

Ein Problem stellt die mikrobiologisch induzierte Versäuerung dar. Dieser Prozess, auch Acetogenese der Bakterien genannt, führt zu einem Absinken des pH-Wertes im Wasser, da Säuren, besonders kurzkettige organische Säuren (z.B. Essigsäure), gebildet werden. Zu niedrige pH-Werte sind unerwünscht, da CaCO₃ in Lösung gehen kann und im späteren Prozess durch Ausfällen stören kann. Niedrige pH-Werte können ebenfalls das Korrosionsrisiko an Bauteilen erhöhen und zu erhöhten Einsatzmengen anderer Additive führen.

Das Wachstum von Mikroorganismen ist auch allgemein problematisch, weil Biofouling eine Schleimbildung bewirkt, wodurch Wasserleitungsteile im Durchfluss gemindert werden oder sogar verstopfen können.

Noch problematischer ist in wasserführenden Leitungssystemen die Ablagerungen von Calciumcarbonat, welches nur unter Einsatz von Chemikalien oder mechanisch entfernt werden kann. Diese Blockade kann hin bis zu einer Betriebsstillegung führen.

Zur Reinigung der Anlagen muss häufig die Herstellung unterbrochen werden, was erhebliche Kosten verursacht. Daher werden bereits seit langem Biozide eingesetzt, um das Wachstum von Mikroorganismen zu unterbinden oder wenigstens ausreichend zu begrenzen. Eine Behandlung der Kreislaufsysteme um die mikrobiologisch induzierte Versäuerung zu stoppen ist aus wirtschaftlichen Aspekten nicht sinnvoll/möglich, da die zu dosierenden Mengen an Biozid mindestens das 10-fache der in der Praxis üblichen Mengen betragen würde. Aus diesem Grund wurde ein Produkt gesucht, welches bei minimalen Einsatz die Wirkung und Leistung der Biozide um ein mehrfaches steigert und dabei o.g. Effekte gezielt minimiert bzw. reduziert.

Die bekannten Biozide werden in oxidierende und nicht-oxidierende Biozide unterteilt. Zu den gängigen oxidierenden Bioziden zählen vor allem Halogene und Halogenoxide, die oft aus Halogeniden und Oxyhalogensäuren in situ hergestellt werden. Weit verbreitet ist die Chlorbleichlauge, NaOCl. Oxidierende Biozide sind bei stark mit organischen Substanzen belastetem Wasser nicht ideal, da solche Substanzen einen (häufig großen) Teil des Biozids inaktivieren können. In solchen Wassersystemen schlagen deshalb EP 517 102 und EP 1 293 482 vor, Halogenamide, die aus Ammoniumsalzen und Halogen freisetzenden Oxidationsmitteln in situ hergestellt werden, zu verwenden. Bevorzugt ist ein Gemisch bestehend aus Ammoniumbromid und Natriumhypochlorit oder die getrennte Dosierung der genannten Komponenten.

Zu den nicht-oxidierenden Bioziden zählen z.B. Glutaradialdehyde, Dibromonitrilopropionamid (DBNPA) oder halogenierte, schwefelhaltige Verbindungen, wie z.B. Chlormethyl-isothiazolon oder Methyl-isothiazolon, um nur einige zu nennen.

In der Wasserbehandlung wurden auch vielfach Kombinationen aus oxidierenden und nicht-oxidierenden Bioziden verwendet, siehe z.B. EP 1 391 430 A1 und WO 2007/096885 A2.

In der DE 10 2011 101 719 A1 wird ein Verfahren zur bioziden Behandlung von industriellen Wassersystemen beschrieben. Dieses Verfahren umfasst zwei Verfahrenschritte A und B. In Schritt A werden a=Ammoniumbromid und b=ein nicht oxidierendes Biozid gemischt und im Schritt B wird die wässrige Lösung der Komponenten a und b sowie getrennt davon ein Oxidationsmittel=Komponente c unmittelbar dem zu behandelnden Wassersystem zudosiert.

Die Komponente a kann auch Natriumbromid, Natriumchlorid, Kaliumchlorid und/oder Kaliumbromid sein, sowie auch Ammoniumsulfat, Ammoniak, Ammoniumchlorid und Ammoniumnitrat und deren Mischungen. Als nicht-oxidierendes Biozid, Komponente b, können, neben dem bevorzugten 2-Brom-2-nitro-1,3-propandiol, alle bekannten Biozide, die gemäß der Gesetzgebung erlaubt sind, eingesetzt werden.

WO 2013/145440 A offenbart ein Verfahren zur bioziden Behandlung von Wasser im Wasserkreislauf bei der Herstellung von Papierpulpe. Der Zugabe von Natriumchlorit folgend wird dem Wasser als Biozid Ammoniumbromid zusammen mit Natriumhypochlorit zugefügt. In Altpapier, sowie Zellstoff und Holzschliff verarbeitenden Papierfabriken, bieten die bisherigen Systeme jedoch noch keine vollständig befriedigende Lösung. Sie erlauben es nicht, das Problem der Versäuerung in den Griff zu bekommen. In der Folge fällt Calcium im System und in der Abwasseraufbereitungsanlage aus. Weiterhin sinkt das oxidativ-reduktive Potential und das System befindet sich im anaeroben Milieu.

Kommt es in Folge der Calciumausfällung zu starken Ablagerungen, müssen Anlagen stillgelegt und gereinigt werden. Ausfallzeiten, Reinigungsaufwand und auch die neue Befüllung und das Wiederanfahren der Anlagen verursachen hohe Kosten. Eine Erhöhung der Biozidmenge ist nicht unbegrenzt möglich, weil das Biozid die Abwasseraufbereitung belastet und bei zu hohen Dosierungen die dort notwendigen Mikroorganismen zu stark dezimiert.

Es besteht daher die Aufgabe ein Verfahren und ein geeignetes Produkt zu finden, welches die Versäuerung zuverlässig verhindert, ohne die Abwasseraufbereitung zu stören und damit die Ausfällung und Austragung des Calciums wirksam verhindert. Eine weitere Aufgabe besteht darin, die CSB Belastung des Abwassers zu senken. Natürlich muss dabei auch die mikrobielle Belastung des Wassersystems wirksam kontrolliert werden.

Überraschend wurde nun gefunden, dass die Kombination eines oxidierenden Biozids oder Biozidsystems mit einer Vebindung mit der Formel MeClO₂, mit Me = Na oder K, die oben erwähnten Probleme lösen kann.

Da industrielle Wasserkreisläufe in der Regel bereits ein Biozidsystem enthalten, wird die Aufgabe erfindungsgemäß dadurch gelöst, dass man ein Alkalichlorit zufügt. Das Alkalichlorit kann in die Papiermaschine direkt zudosiert werden und wirkt gemeinsam mit den dort im Wasserkreislauf bereits vorhanden Biozidsystemen. Das Biozidsystem kann z.B. das in DE 10 2011 101 719 A1 beschriebene System sein, aber auch das in EP 517 102 B1 vorgestellte System.

Mit beiden erwähnten Systemen bewirkt die Zugabe des Alkalichlorit eine deutliche Verbesserung der Wirksamkeit in Bezug auf die Calciumausfällung und in Bezug auf die Reduktion des CSB Wertes im Wasser, sowie der mikrobiellen Belastung.

Die Wirkung des zugesetzen Alkalichlorit besteht in erster Linie in einer pH Verschiebung, induziert durch eine Kontrolle der Mikrobiologie durch das bereits eingesetzte Biozidsystem, es hebt das oxidativ-reduktive Potential an und wirkt somit als Verstärker oder Booster für das Biozidsystem im Wasserkreislauf.

Zudem wird die Aufgabe durch die Verwendung von Alkalichlorit als Zusatz zu oxidierenden Bioziden oder Biozidsystemen bei der Behandlung von Wasserkreisläufen gelöst.

Alkalichlorite sind an sich bekannt. Es handelt sich dabei um die Salze der chlorigen Säure, HClO₂, in denen Chlor die Oxidationsstufe +3 aufweist. Ihre Hauptanwendung ist die Erzeugung von Chlordioxid, welches in der Textil- und Papierindustrie zu Bleichzwecken verwendet wird. Chlordioxid dient auch zur Desinfektion, beispielsweise von Trinkwasser. Da Chlordioxid instabil und in höheren Konzentrationen explosiv ist, wird es direkt vor oder bei der Anwendung aus Chlorit und Säure erzeugt. Das wichtigste und auch erfindungsgemäß bevorzugte Chlorit ist Natriumchlorit, mit der chemischen Formel NaClO₂.

Erfindungsgemäß soll das Natriumchlorit als Oxidationsmittel dienen, da pH-Werte, welche eine Umsetzung zu Chlordioxid bewirken, viel niedriger als erwünscht sind. Erfindungsgemäß soll der pH-Wert in dem behandelten Wasser bei etwa 7 liegen, d.h. von 6,3 bis 7,7 betragen.

Natriumchlorit könnte zwar an sich allein als Oxidationsmittel eingesetzt werden, jedoch wären z.B. in der Papierverarbeitung die notwendigen Konzentrationen viel zu hoch, um wirtschaftlich zu sein. In Versuchen konnte selbst bei Einsatzmengen von 5000 ppm keine biozide Wirkung nachgewiesen werden.

Als oxidativ wirkendes Biozid oder Biozidsystem kommen alle an sich bekannten Halogenamine in Betracht.Das erfindungsgemäße Verfahren und Mittel lässt sich mit allen bereits vorhandenen Halogenaminen als oxidierendes Biozid oder Biozidsystem realisieren, indem Alkalichlorit zugegeben wird. Wird ein Wasserkreislauf neu befüllt, muss natürlich neben dem Alkalichlorit auch das Halogenamin zugefügt werden.

Das oxidativ wirkende Biozid(system) ist vorzugsweise ein in-situ hergestelltes Addukt aus einer Ammoniumbromid-Formulierung und einer Natriumhypochlorit-Lösung, wie z.B. in der EP 517 102 B1 beschrieben. Das oxidierende Biozid(system) kann auch mit einem nicht-oxidierenden Biozid kombiniert werden, wie z.B. in der DE 10 2011 101 719 A1 beschrieben.

Das oxidierende Biozid(system) kann in der für das jeweilige Biozid(system) üblichen Menge eingesetzt werden, es wird vorzugsweise in stark reduzierter Menge eingesetzt, z.B. bis zu 45 % weniger, vorzugsweise bis zu 30 % weniger, als üblich.

Die Mengen an Natriumchlorit werden so gewählt, dass der pH-Wert im Wassersystem bei etwa 7 bleibt und ein oxidativ-reduktives Potential von etwa 0 mV erreicht wird. Erfindungsgemäß wird typischerweise eine 20 bis 30 Gew.-%-ige wässrige Lösung des Natriumchlorits zudosiert, die die beste Wirkung mit dem Biozidsystem zeigt. Die Dosierung als flüssige Lösung ist besonders einfach in der Handhabung und Kontrolle der Menge.

Ein evtl. enthaltenes nicht-oxidierendes Biozid wird zweckmäßig in der üblichen Menge eingesetzt. Es kommen alle bekannten, nicht-oxidierenden Biozide auch in Kombination in Frage. Bevorzugt werden bromierte Nitroverbindungen, besonders bevorzugt 2-Brom-2-nitro-1,3-propandiol (Bronopol®), eingesetzt.

Ein großer Vorteil des erfindungsgemäßen Verfahrens und des insbesondere flüssig dosierten Produktes NaClO₂ ist die leichte Kontrolle der Dosierung. Durch Messung des oxidativ-reduktiven Potentials und des pH-Wertes sowie eine Chlorbestimmung kann die Dosierung unmittelbar an die im Wassersystem vorliegende mikrobielle Belastung angepasst werden. Dies ist bei nicht-oxidierenden Bioziden unmöglich, erst nach Tagen lässt sich eine Überdosierung durch Schäden in der Abwasseraufbereitung erkennen. Eine Unterdosierung ist ebenfalls nur durch mikrobielle Analytik erkennbar.

Ein weiterer Vorteil ist die sichere Verhinderung von Calciumfällungen, die bisher ohne die erfindungsgemäße Verwendung von Alkalichlorit als Zusatz zu massiven Kalkablagerungen bis hin zu Verstopfungen geführt haben.

Weiterhin wird die Belastung der Abwasseraufbereitung reduziert. Die zulässige Fracht, das heißt das Produkt aus Abwassermenge und CSB (Chemischer Sauerstoffbedarf, als Summenparameter ein Maß für die Summe aller im Wasser vorhandenen, unter bestimmten Bedingungen oxidierbaren Stoffe) im Abwasser in Tonne/Tag, ist für jede Abwasseraufbereitungsanlage individuell begrenzt. Kann durch das erfindungsgemäße Verfahren und das Produkt die Fracht gesenkt werden, ist eine höhere Abwassermenge möglich, was eine höhere Produktion erlaubt.

Ein weiterer Effekt der Kombination aus Alkalichlorit und einem Halogenamin ist, dass die initiale Nassfestigkeit einer Papierbahn erhöht wird und die Ausbeute und die Wirkung der papierverarbeitenden Produktionslinien gesteigert wird.

Für die Anwendung in der Praxis ist es bevorzugt, das Alkalichlorit vor oder zeitgleich, aber an getrennten Stellen, mit dem Halogenamin dem Wasser zuzufügen. Insbesondere wird das Alkalichlorit als erste Komponente zudosiert. Das erfindungsgemäße Verfahren umfasst daher vorzugsweise den Einsatz der getrennt voneinander aufbewahrten Komponenten des erfindungsgemäßen Produktes, nämlich des Halogenamins und des MeClO₂.

Die Dosierung kann in an sich bekannter Weise mittels entsprechenden Dosieranlagen erfolgen. Bevorzugt ist eine Zudosierung als 20 bis 30 Gew.-%-ige wässrige Lösung. Das Anwendungsgebiet des erfindungsgemäßen Verfahrens und der Verwendung ist die Papierherstellung, besonders die Herstellung von Papier aus Altpapier und aber auch die gängigen Herstellungsverfahren zur Papiererzeugung aus jeder Rohstoffquelle. Das zu behandelnde Wassersystem ist hierbei der Stoff-/ Wasserkreislauf einer Papiermaschine. Die Versäuerung ist im Stoff-/ Wasserkreislauf einer Papiermaschine besonders nachteilig, da hierbei CaCO₃ aufgrund pH-Wert-Reduktion in Lösung geht. In Folge dessen gelangt das gelöste Calciumhydrogencarbonat in die Abwasseraufbereitung, wo es durch die dort stattfindende Erhöhung des pH-Wertes wieder als CaCO₃ ausfällt und massive Probleme wie z.B. Zusetzen von Rohrleitungen, Störung der biologischen Abwasserreinigung etc. verursacht. Bleibt hingegen der pH-Wert im Stoff-/ Wasserkreislauf einer Papiermaschine durch das erfindungsgemäße Verfahren auf einem höherem Niveau, löst sich weniger CaCO₃. Der Kalk kann somit mit dem hergestellten Papier ausgetragen werden.

Die Dosierung des Alkalichlorits erfolgt bei der Papierherstellung bevorzugt in den Dickstoff, aber auch in die Prozesswässer. Besonders bevorzugt erfolgt sie in den ersten Schritt der Papierherstellung in die Papier-, Zellstoff- oder Holzschliffauflösung, in den sog. Pulper.

Die Erfindung wird anhand des folgenden Beispiels näher erläutert, ohne jedoch auf die konkret beschrieben Ausführungsform beschränkt zu sein.

Soweit nichts anderes angegeben ist oder sich aus dem Zusammenhang zwingend anders ergibt, beziehen sich Prozentangaben auf das Gewicht, im Zweifel auf das Gesamtgewicht der Mischung.

### Beispiel

Eine Papiermaschine wurde mit dem Biozidsystem DILURIT® 911 (BK Giulini GmbH, DE), einer Mischung aus Ammoniumbromid, Bronopol® und Chlorbleichlauge, behandelt. Die Dosierstellen für das Biozid sind Siebwasser, Maschinenbütte und Klarwasserbütte. Das Natriumchlorit wurde direkt in den Pulper zugegeben.

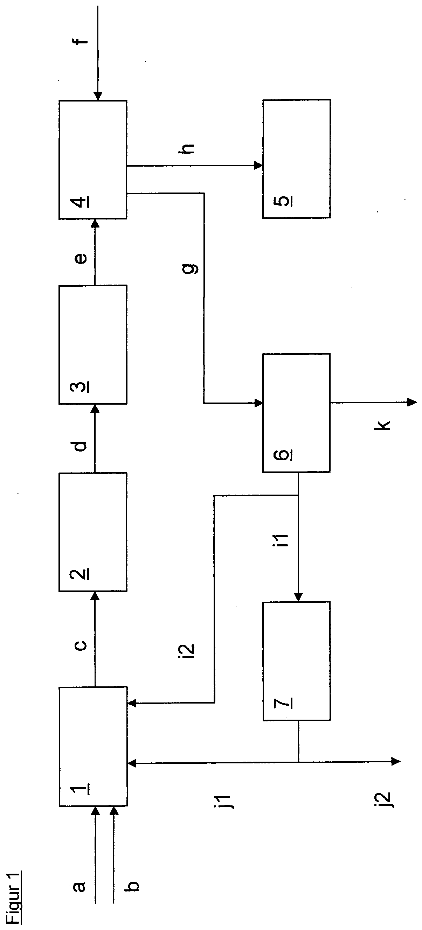

Im Versuch wurden die Messpunkte derart gewählt, dass nachvollzogen werden kann, dass in allen Bereichen der Papierproduktion die Anwendung des erfindungsgemäßen Mittels die Effekte hervorruft. Aus diesem Grund wurden neben dem Pulper das Siebwasser und die Abwasserreinigungsanlage überprüft. In Figur 1 ist die Anlage der Papierherstellung inklusive Abwasseraufbereitung schematisch gezeigt. Das Altpapier oder anderer Zellstoff a wird zunächst im Pulper 1 mit Wasser b (aus der Abwasseraufbereitung j1, gefiltertes Siebwasser i2 oder anderes (Prozess-)Wasser) versetzt. Der Pulper 1 umfasst in der Regel auch einen Refiner und eine Pulperableerbütte. Die erzeugte Suspension c wird dann über Stapelbütte 2 und Maschinenbütte 3 der Papiermaschine 4 mit einem Sieb bis hin zu mehreren Sieben (ein und mehrlagie Papiermaschinen) zugeführt, ggfs. unter Zufuhr weiteren Wassers f. In der Papiermaschine 4 wird die Suspension e auf der Siebpartie entwässert, wobei Siebwasser g und eine Papierbahn h erhalten werden. Die Papierbahn h wird in die Trockengruppe 5 überführt. Das Siebwasser g wird zur Abtrennung von Zellstoffasern über Filter 6 geleitet. Das so vorgereinigte Waser i kann in den Pulper 1 zurückgeführt werden und/oder wird der Abwasseraufbereitung 7 zugeführt. Die Abwasseraufbereitung 7 umfasst typischerweise zumindest eine anaerobe und eine aerobe Behandlungsstufe. Gereinigtes Abwasser j kann ebenfalls in den Pulper 1 geführt werden, j1, oder es wird aus dem Kreislauf ausgeschleust, j2. Es versteht sich, dass diese einfache Übersicht nicht alle Varianten aufzählen und im Detail erläutern kann, sondern nur die wesentlichen Prinzipien aufzeigt.

Über einige Monate wurde nun zeitweise, nämlich zunächst 2 Wochen und dann 2 Monate, das erfindungsgemäße Verfahren angewandt, und davor sowie dazwischen nur das auch bisher verwendete oxidierende Biozidsystem zugefügt. Dabei wurde an verschiedenen Messpunkten die Calciumkonzentration, der pH-Wert und der CSB in Abhängigkeit von der Zeit gemessen.

Messpunkte sind am Pulper 1, an der Pulperableerbütte, an den Stapelbütten 2, an den Maschinenbütten 3, in der Leitung für das Siebwasser g und im Zulauf zur und im Ablauf von der anaeroben Stufe der Abwasseraufbereitung 7 sowie der Leitung für das gereinigte Wasser j (Biowasser) angeordnet. Das Alkalichlorit wird an der Stelle "Pulper" in flüssiger Form zudosiert, das oxidierende Biozidsystem zum Siebwasser g.

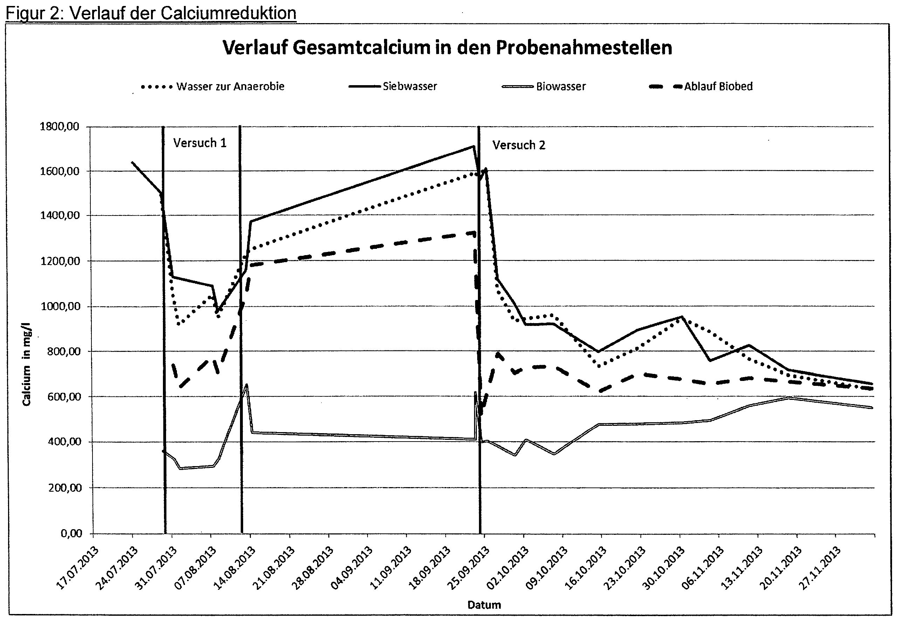

In Figur 2 ist der Verlauf der Calciumkonzentration illustriert. Dargestellt sind die Messwerte am Zulauf zur anaeroben Stufe der Abwasseraufbereitung 7 als gepunktete Linie, im Siebwasser g als durchgezogene schwarze Linie, im die Aufbereitung verlassenden Wasser j (Biowasser) als durchgezogene graue Linie und im Ablauf (Ablauf Biobed) der anaerioben Stufe der Abwasseraufbereitung 7 als gestrichelte Linie.

Man erkennt, dass das erfindungsgemäße Verfahren, d.h. die Behandlung mit Alkalichlorit und einem oxidierenden Biozidsystem, die Calciumkonzentration an allen Messpunkten deutlich senkt. Calcium wurde also mit dem Papier ausgetragen. Wird das Alkalichlorit nicht mehr zugefügt, steigt die Calciumbelastung wieder an. Die dauerhafte Anwendung des erfindungsgemäßen Mittels stabilisiert die Calciumkonzentration auf niedrigem Niveau.

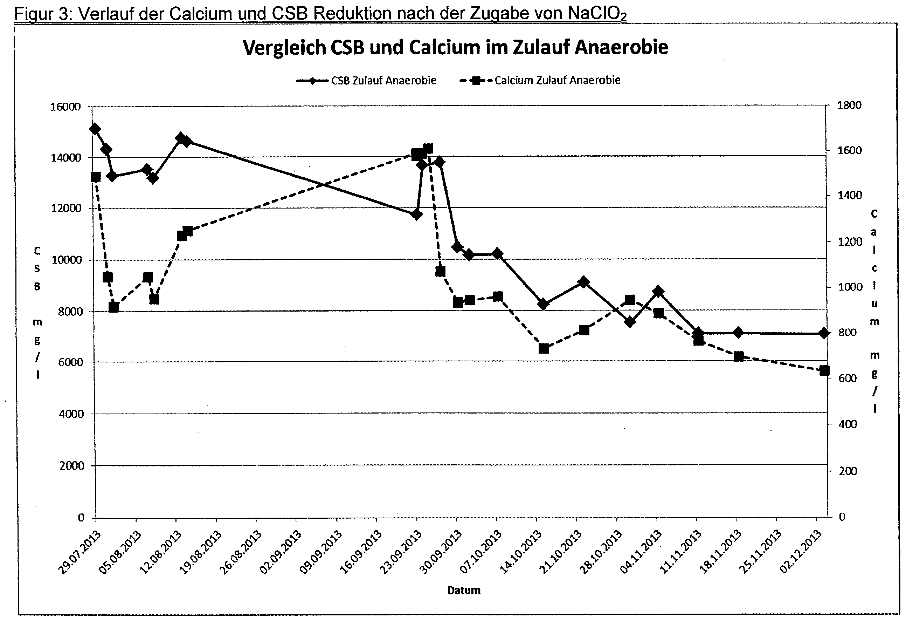

In Figur 3 sind die Messwerte für Calcium und CSB im Zulauf der anaeroben Stufe der Abwasseraufbereitung 7 dargestellt. Die Calciummesswerte sind als Quadrate, die CSB-Messwerte als Raute gezeigt. Es wird deutlich, dass die Wirkung des erfindungsgemäßen Mittels auf den CSB auch nach Beendigung der Zudosierung von Alkalichlorit noch länger anhält. Die Wirkung auf den Calciumgehalt lässt schneller nach.

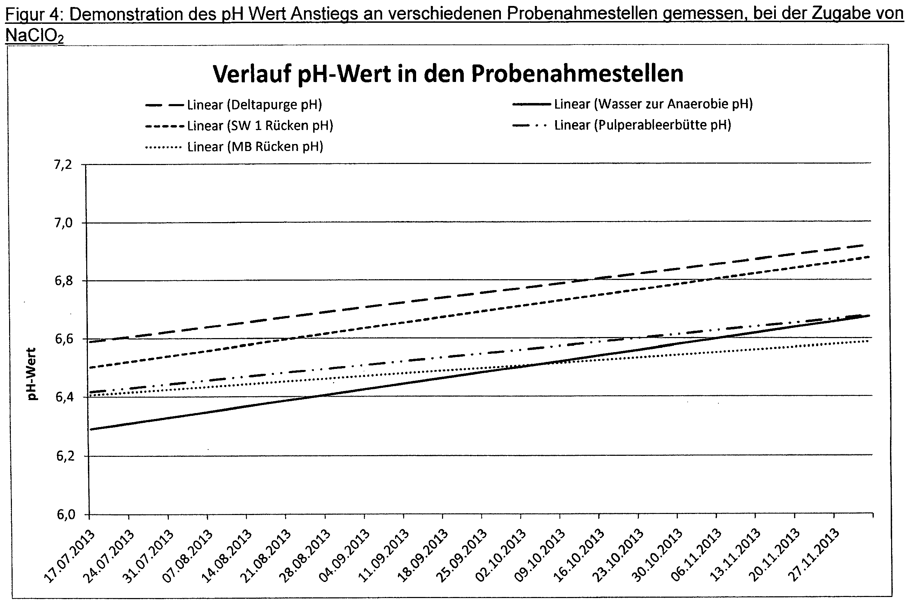

In Figur 4 ist der pH-Wert an 6 verschiedenen Messpunkten dargestellt. Die lang gestrichelte Linie stellt die Werte im Filter 6 dar, die kurzgestrichelte Linie die Werte im Siebwasser g, die gepunktete Linie die Werte an der Maschinenbütte 3, die durchgezogene Linie den Wert im Zulauf zur Anaerobie von 7 und die Strichpunkt-Linie die Werte an der Pulperableerbütte. Es zeigt sich, dass der pH-Wert bereits durch eine sehr kurze Anwendung des erfindungsgemäßen Mittels bzw. Verfahrens langanhaltend erhöht wurde.

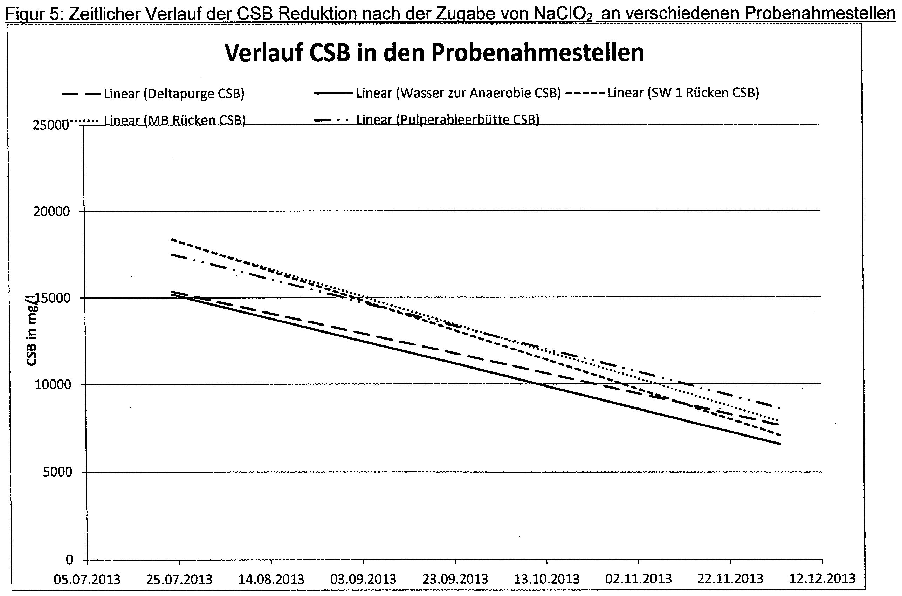

Das gleiche zeigt Figur 5 für den CSB, der ebenfalls durch eine kurze Verwendung von Alkalichlorit langanhaltend gesenkt werden konnte.

Durch den kombinierten Einsatz eines oxidativ wirkenden Biozidsystems mit einem Alaklichlorit konnte in allen bisherigen Anwendungen die Aufgabestellung, Reduktion von Calcium und CSB in der gesamten Papierherstellungslinie sowie Abwasseraufbereitungsanalge gewährleistet werden. Für die Betreiber von Anlagen, die durch Calcium- oder CSB Belastung begrenzt sind, werden durch den Einsatz des erfindugnsgemäßen Verfahrens bzw. Mittels diese Parameter deutlich reduziert. Dies führt u.a. dazu, dass CSB Einleitwerte eingehalten werden können und/oder Produktionskapazitäten erhöht werden können, da der Input an Calcium und CSB durch das Rohmaterial erhöht werden kann. Eine Steigerung der Papierherstellung ist möglich.

## Patentansprüche

1. Verfahren zur bioziden Behandlung von mikrobiell versäuerten, industriellen Wasserkreisläufen in Altpapier, Zellstoff oder Holzschliff verarbeitenden Papierfabriken zur Reduktion der Calcium-Belastung und des chemischen Sauerstoffbedarfs, **dadurch gekennzeichnet, dass** dem Wasser mindestens ein Alkalichlorit und mindestens ein Halogenamin als oxidativ wirkendes Biozid oder Biozidsystem zugefügt werden, wobei Alkalichlorit und das oxidierende Biozidsystem in einer solchen Menge dosiert werden, dass der pH-Wert im Wasser im Bereich von 6,3 bis 7,7 liegt.

2. Verfahren gemäß Anspruch 1, **dadurch gekennzeichnet, dass** Natriumchlorit oder Kaliumchlorit, vorzugsweise Natriumchlorit, als Alkalichlorit verwendet wird.

3. Verfahren gemäß mindestens einem der vorhergehenden Ansprüche, **dadurch gekennzeichnet, dass** zusätzlich mindestens ein nicht-oxidierendes Biozid verwendet wird.

4. Verfahren gemäß mindestens einem der Ansprüche 1 bis 3, **dadurch gekennzeichnet, dass** das Alkalichlorit und das oxidierende Biozidsystem in einer solchen Menge dosiert werden, dass der pH-Wert im Wasser bei etwa 7 liegt und ein oxidativ-reduktives Potential von etwa 0 mV erreicht wird.

5. Verfahren gemäß mindesten einem der Ansprüche 1 bis 4 **dadurch gekennzeichnet, dass** das Alkalichlorit vor oder gleichzeitig, aber an getrenneter Stelle, mit dem oxidativ wirkenden Biozid oder Biozidsystem dem Wasserkreislauf zugefügt wird.

6. Verwendung eines Alkalichlorit als Zusatz zur Behandlung von mikrobiell versäuerten, industriellen Wasserkreisläufen in Altpapier, Zellstoff oder Holzschliff verarbeitenden Papierfabriken, die ein Halogenamin als oxidativ wirkendes Biozid oder Biozidsystem enthalten, zur Einstellung des pH-Wertes auf von 6,3 bis 7,7, Senkung der Konzentration an gelöstem Calcium und Senkung des chemischen Sauerstoffbedarfs.

7. Verwendung gemäß Anspruch 6, **dadurch gekennzeichnet, dass** als Alkalichlorit Natriumchlorit verwendet wird.

8. Verwendung gemäß Anspruch 6 oder 7, **dadurch gekennzeichnet, dass** das Alkalichlorit als eine flüssige, wässrige Lösung verwendet wird, vorzugsweise mit einer Konzentration von 20 bis 30 Gew.-%.

9. Verwendung gemäß Anspruch 6, 7 oder 8, **dadurch gekennzeichnet, dass** als oxidativ wirkendes Biozid oder Biozidsystem eine Kombination von Ammoniumbromid und Alkalihypochlorit verwendet wird.

10. Verwendung gemäß einem der Ansprüche 6 bis 9, **dadurch gekennzeichnet, dass** zusätzlich mindestens ein nicht-oxidierendes Biozid verwendet wird, vorzugsweise als separate Komponente.

## Claims

1. Method for the biocide treatment of microbiologically acidified industrial water cycles in paper mills which process waste paper, pulp or wood pulp for the reduction of calcium loading and the chemical oxygen demand, **characterised in that** at least one alkali chlorite and at least one halogen amine are added to the water as an oxidative biocide or biocide system, wherein alkali chlorite and the oxidising biocide system are dosed in such a quantity that the pH value in the water is in the range from 6.3 to 7.7.

2. Method according to claim 1, **characterised in that** sodium chlorite or potassium chlorite, preferably sodium chlorite, is used as the alkali chlorite.

3. Method according to at least one of the preceding claims, **characterised in that** at least one non-oxidising biocide is additionally used.

4. Method according to at least one of claims 1 to 3, **characterised in that** the alkali chlorite and the oxidising biocide system are dosed in such a quantity that the pH value in the water is approximately 7 and an oxidation-reduction potential of approximately 0 mV is achieved.

5. Method according to at least one of claims 1 to 4, **characterised in that** the alkali chlorite is added to the water cycle before or at the same time as, but at a separate position from, the oxidative biocide or biocide system.

6. Use of an alkali chlorite as an additive for the treatment of microbiologically acidified industrial water systems in paper mills which process waste paper, pulp or wood pulp, wherein the water system contains a halogen amine as an oxidative biocide or biocide system, for the adjustment of the pH value from 6.3 to 7.7, reduction of the concentration of dissolved calcium, and reduction of the chemical oxygen demand.

7. Use according to claim 6, **characterised in that** sodium chlorite is used as the alkali chlorite.

8. Use according to claim 6 or 7, **characterised in that** the alkali chlorite is used as a liquid, aqueous solution, preferably having a concentration of 20 to 30% by weight.

9. Use according to claim 6, 7 or 8, **characterised in that** a combination of ammonium bromide and alkali hypochlorite is used as the oxidative biocide or biocide system.

10. Use according to one of claims 6 to 9, **characterised in that** at least one non-oxidising biocide is additionally used, preferably as a separate component.

## Revendications

1. Procédé de traitement biocide de circuits d'eau industriels acidifiés par des microbes dans des fabriques de papier transformant des vieux papiers, de la cellulose ou de la pâte de bois, en vue d'une réduction de la charge de calcium et de la demande chimique en oxygène, **caractérisé en ce qu'**au moins un chlorite alcalin et au moins une association d'halogène et d'amine est ajouté(e) à ladite eau en tant que biocide ou système biocide agissant par oxydation, dans lequel du chlorite alcalin et le système biocide oxydant sont dosés en une telle quantité que la valeur de pH de l'eau se situe dans la plage comprise entre 6,3 et 7,7.

2. Procédé selon la revendication 1, **caractérisé en ce que** du chlorite de sodium ou du chlorite de potassium, de manière préférée du chlorite de sodium, est utilisé en tant que chlorite alcalin.

3. Procédé selon l'une quelconque des revendications précédentes, **caractérisé en ce qu'**au moins un biocide non oxydant est utilisé de manière supplémentaire.

4. Procédé selon l'une quelconque des revendications 1 à 3, **caractérisé en ce que** le chlorite alcalin et le système biocide oxydant sont dosés en une quantité telle que la valeur de pH de l'eau est d'environ 7 et un potentiel de réduction par oxydation d'environ 0 mV est atteint.

5. Procédé selon l'une quelconque des revendications 1 à 4, **caractérisé en ce que** le chlorite alcalin est ajouté au circuit d'eau avant le biocide ou le système biocide agissant par oxydation ou en même temps que celui-ci, mais à des emplacements séparés.

6. Utilisation d'un chlorite alcalin comme additif pour le traitement de circuits d'eau industriels acidifiés par des microbes dans des fabriques de papier transformant des vieux papiers, de la cellulose ou de la pâte de bois, qui contiennent une association d'halogène et d'amine en tant que biocide ou système biocide agissant par oxydation, en vue de l'ajustement de la valeur de pH jusqu'à une valeur comprise entre 6,3 et 7,7, d'un abaissement de la concentration en calcium dissous et d'un abaissement de la demande chimique en oxygène.

7. Utilisation selon la revendication 6, **caractérisée en ce que** du chlorite de sodium est utilisé en tant que chlorite alcalin.

8. Utilisation selon la revendication 6 ou 7, **caractérisée en ce que** le chlorite alcalin est utilisé comme solution aqueuse liquide, de manière préférée avec une concentration comprise entre 20 et 30% en poids.

9. Utilisation selon la revendication 6, 7 ou 8, **caractérisée en ce qu'**une combinaison de bromure d'ammonium et d'hypochlorite alcalin est utilisée comme biocide ou système biocide agissant par oxydation.

10. Utilisation selon l'une quelconque des revendications 6 à 9, **caractérisé en ce qu'**au moins un biocide non oxydant est utilisé de manière supplémentaire, de manière préférée sous forme de composant séparé.
